# EUROPEAN PATENT SPECIFICATION

(11) **EP 3 614 830 B1**
(45) Date of publication and mention of the grant of the patent: **27.04.2022**
(21) Application number: 18791608.5
(22) Date of filing: 27.04.2018
(51) Int. Cl.: A01G 9/12, A01G 17/04, A01G 13/02

(54) **SUPPORT KIT, PLANT SUPPORT AND METHOD FOR PLANTS**
STÜTZKIT, -AUSRÜSTUNG UND -VERFAHREN FÜR PFLANZEN
KIT DE SUPPORT, ÉQUIPEMENT ET PROCÉDÉ POUR PLANTES

(30) Priority: 28.04.2017 AU 2017901553
(43) Date of publication of application: 04.03.2020
(73) Proprietor: Corex Plastics (Australia) PTY LTD, Melbourne, Victoria 3175 (AU); Buruma, Timothy Austin, Melbourne, Victoria 3115 (AU); Buruma, Robert Andrew, Melbourne, Victoria 3156 (AU)
(72) Inventor: BURUMA, Timothy Austin, Melbourne, Victoria 3115 (AU); BURUMA, Robert Andrew, Melbourne, Victoria 3156 (AU); WHITELEY, Simon Douglas, Melbourne, Victoria 3142 (AU); BACON, Edward Philip, Melbourne, Victoria 3912 (AU)
(74) Representative: Miller, James Lionel Woolverton
(86) International application number: PCT/AU2018/050393
(87) International publication number: WO 2018/195608

(56) References cited:
- CA-A1- 2 384 442
- DE-U1- 20 003 468
- DE-U1- 20 217 318
- DE-U1- 20 217 318
- GB-A- 772 297
- GB-A- 1 006 677
- GB-A- 191 214 815
- KR-U- 20100 010 361
- US-A- 1 987 255
- US-A- 2 152 018
- US-A1- 2013 139 434
- US-B1- 8 857 103
- Anonymous: "Plant Support 3 Ring 450mm", SILVERLINE , 1 January 2016 (2016-01-01), pages 1-4, XP055647249, Retrieved from the Internet: URL:https://web.archive.org/web/2016010111 2151/https://www.amazon.co.uk/SILVERLINE-P lant-Support-Ring-450mm/dp/B00I1OQW9K

## Description

### Technical Field

The present disclosure generally relates to kits, equipment and methods for horticultural applications. More specifically, the present disclosure relates to a kit , a plant support and a method for supporting plants such as seedlings, saplings, trees and shrubs.

### Background

When transplanting a plant such as a sapling, trees or shrubs into soil, a hole is typically dug to a depth and size that at least accommodates the roots of the plant. The plant roots are placed into the hole and the hole is filled with soil. Elongate rigid stakes may then be driven into the ground adjacent the plant to enable the stem or trunk of the plant to be secured to the stakes. A tool such as sledge hammer or a post driver may be used to manually drive the stakes into the ground; this requires time and physical exertion though. Alternatively, pneumatically or hydraulically powered post drivers may be used. However, powered post drivers can be over 20 kg in weight and may be unwieldy. Powered post drivers may also be unavailable or the cost of purchasing or hiring one may be prohibitive.

Plant stems or trunks are typically secured to the rigid stakes on at least two opposite sides of the stem or trunk by a strap or ribbon. Securing the plant in place is intended to provide support for the plant while it grows and reduce the risk of the stem or trunk being broken and assist in maintaining vertical growth. Nevertheless, the plant stem or trunk may still be broken if the plant experiences high winds or if it is struck by an object. Also, if rigid stakes are moved from their intended orientation, they may remain in that orientation and cause stress on the plant stem or trunk.

DE 200 03 468 U1 discloses a coupling part for connecting frames and rods in the plant area. US 2013/139434 A1 discloses a plant support system. US 2 152 018 A discloses a plant support. DE 202 17 318 U2 discloses a fastening and support system for plants having a central column with carrier sleeve with clamps at top and bottom engaging loops of bent wire. GB 14815 A discloses means for supporting herbaceous plants. US 1 987 255 A discloses a plant protector. CA 2 384 442 A1 discloses a plant support.

Any discussion of documents, acts, materials, devices, articles or the like which has been included in the present specification is not to be taken as an admission that any or all of these matters: form part of the prior art base; were common general knowledge in the field relevant to the present disclosure as it existed before the priority date of each claim of this application; or could have been understood, regarded as relevant or reasonably expected to have been combined by a person skilled in the art.

### Summary

According to a first aspect of the present invention, there is provided a kit for forming a plant support according to Claim 1.

According to a second aspect of the present invention, there is provided a method of supporting a plant according to Claim 14.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Brief Description of Drawings

Embodiments are described in further detail below, by way of example, with reference to the accompanying drawings briefly described below:
Figure 1 is an exploded plan view of a kit for erecting a plant support;
Figure 2A is a plan view of a polymer stake sleeve in an unassembled configuration;
Figure 2B is a front view of the polymer stake sleeve of Fig. 2A in an assembled configuration;
Figure 2C is a back view of the polymer stake sleeve of Fig. 2A in an assembled configuration;
Figure 3 is a perspective view of a frame to support a plurality stakes according to some embodiments;
Figure 4 is a perspective view of an assembled plant support;
Figure 5 is a flow chart for a method of supporting a plant;
Figure 6 is a perspective view of an assembled plant support according to some embodiments; and
Figure 7 is a perspective view of a polymer stake according to some embodiments.

### Description of Embodiments

The present disclosure generally relates to equipment and methods for horticultural applications. More specifically, the present disclosure relates to a kit, a plant support and a method for supporting plants. The kits and equipment disclosed herein may be used during the planting or transplanting of plants to support the plants after planting or transplanting.

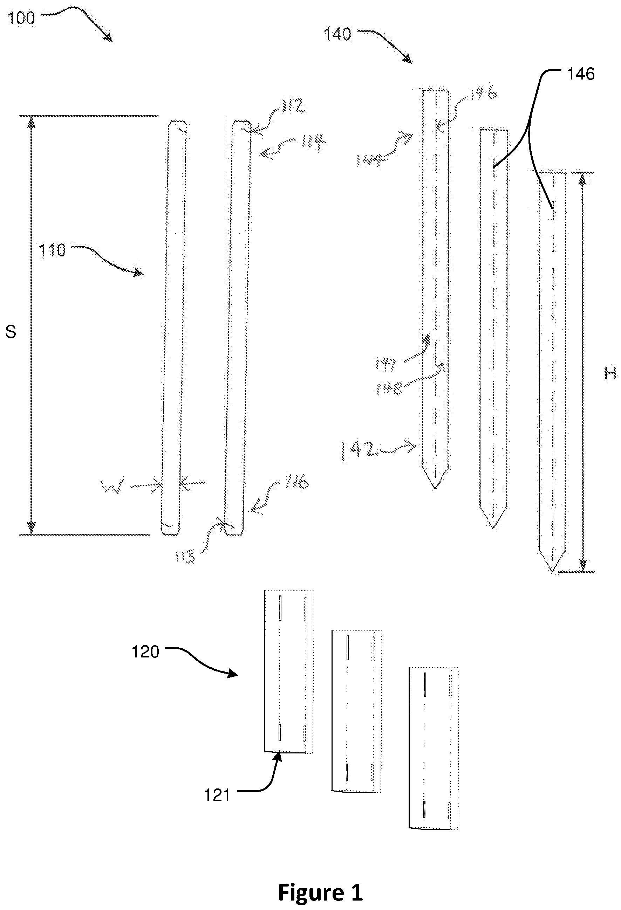

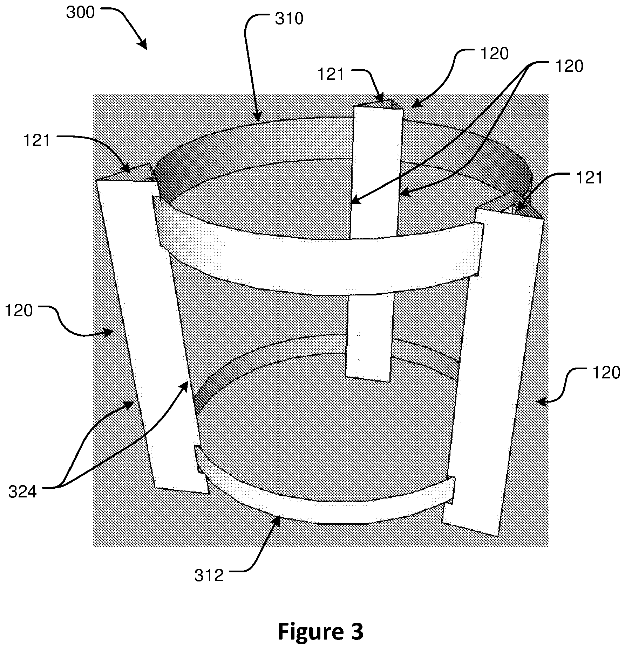

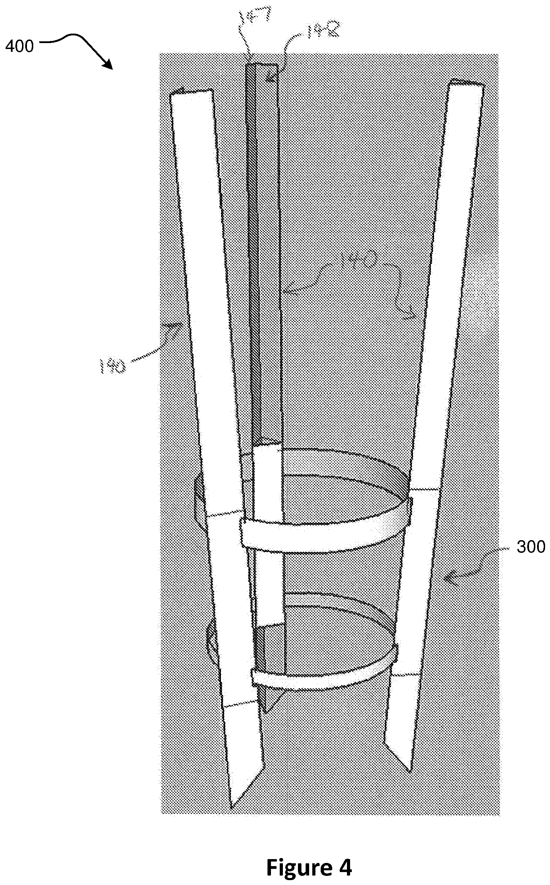

Referring to Figures 1 to 4, a kit 100 for forming a plant support 400 is shown according to some embodiments. The kit 100 comprises a plurality of polymer ring strips 110. Each polymer ring strip 110 is formable into a respective curved band such as a respective ring 310 (Fig. 3).

The kit 100 also comprises a plurality of polymer stake sleeves 120, each sleeve 120 defining an elongate channel 121 to receive a polymer stake 140 therethrough and each sleeve 120 defining a plurality of slots 222 sized to receive at least a portion of a respective ring strip 110 therethrough, the slots 222 being defined at spaced locations along a sleeve length L of each sleeve 120.

The kit 100 further comprises a plurality of polymer stakes 140, each stake 140 being sized to fit through the elongate channel 121 and having a stake length H greater than the sleeve length L, wherein each stake 140 has a first end 142 and an opposite second end 144, and wherein a lengthwise rigidity of the stake is sufficient to cooperate with the stake sleeves 120 and ring strips 110 to form the plant support 400 when the first ends 142 of the stakes are submerged in soil along with at least a portion of the stake sleeves 120. The assembly of kit 100 to form plant support 400 will be described in further detail below.

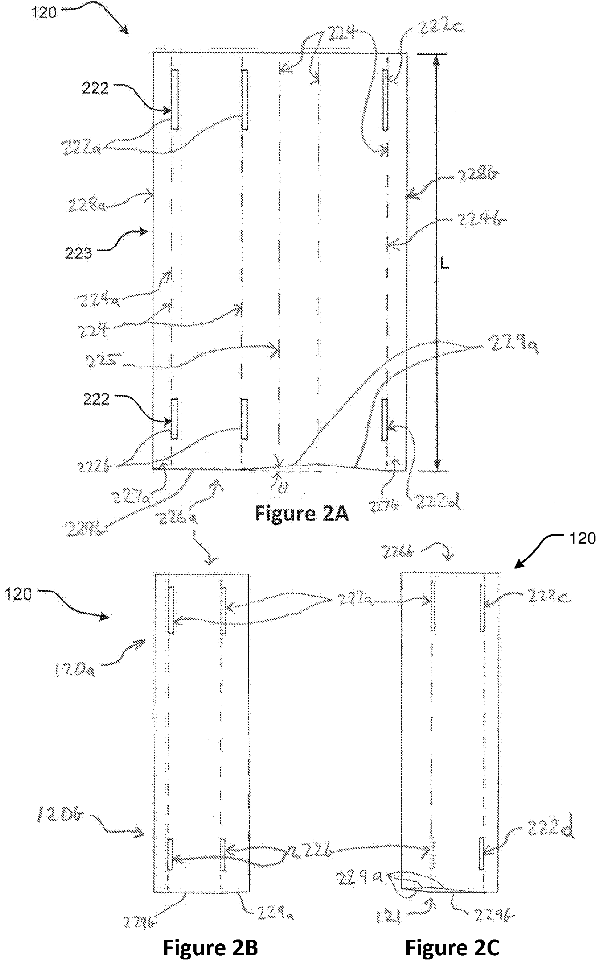

Referring to Figure 2A, each stake sleeve 120 is formed from a polymer sheet 223 and shown in an unassembled configuration. The polymer sheet 223 may comprise a plurality of lines of weakness 224 along the sleeve length L to assist in folding the polymer sheet 223 about the line of weakness 224. The lines of weakness 224 may comprise any one or more of: a crease, a fold, and a perforation.

Opposite edge portions 227a, 227b may be attached to each other to define the elongate channel 121 in an interior space of the folded polymer sheet 223 to assemble the stake sleeve 120 in an assembled configuration. In some embodiments, the opposite edge portions 227a, 227b are attached by welding. For example, hot air welding or ultrasonic welding may be used to attach the opposite edge portions 227a, 227b to each other. Alternatively, they may be attached by stapling, a fastener or adhesive. The attachment of the opposite edge portions 227a, 227b may be achieved by attachment of portions of the opposing surfaces of the opposite edge portions 227a, 227b.

In some embodiments, the edge portions 227a, 227b include at least one complementary set of tabs and slots (not shown) to enable opposite edge portions 227a, 227b to be attached to each other.

The provision of opposite edge portions 227a, 227b advantageously enables the stake sleeves 120 to be assembled from a flat polymer sheet 223.

The polymer sheet 223 may include a central line of weakness 225 that divides the sheet 223 into two portions 226a, 226b. Referring to Figures 2B and 2C, the central line of weakness 225 assists in the folding of the two portions 226a, 226b onto each other. The central line of weakness 225 advantageously enables the stake sleeve 120 to be flattened in a closed configuration even if the opposite edge portions 227a, 227b are attached to each other.

In alternative embodiments, the stake sleeves 120 may be formed in the assembled configuration such that portions 226a and 226b are attached to each other at lines of weakness 224a, 224b without the need for welding.

The edge portions 227a, 227b are defined by the outer lengthwise edges 228a, 228b on one side and may be defined by lines of weakness 224a, 224b along the sleeve length L on the opposite side of the edge portions 227a, 227b. The lines of weakness 224a, 224b assist the portions 226a, 226b to be bent or folded away from each other when defining the elongate channel 121 in an open configuration of the stake sleeve 120 even when opposite edge portions 227a, 227b are attached to each other.

Additional lines of weakness 224 enable the polymer sheet 223 to be bent to form edges 324 about the additional lines of weakness 224 when the stake sleeve 120 is in an open configuration.

The plurality of slots 222 may comprise a plurality of slot pairs 222a, 222b at the spaced locations, each slot of a slot pair 222a, 222b being located at a same lengthwise position along the sleeve 120, wherein one of the ring strips 110 can be received through both slots of a slot pair 222a, 222b.

In some embodiments, the plurality of slots 222 comprise an upper slot set 222a positioned near an upper end 120a of the sleeve; and a lower slot set 222b positioned near a lower end 120b of the sleeve. The upper slot set 222a may also comprise one or more auxiliary slots 222c in portion 226b to provide an alternative slot for a portion of the ring strip 110 to be received in. Similarly, the lower slot set 222b may also comprise one or more auxiliary slots 222d in portion 226b.

The upper slot set 222a may have larger aperture slots compared to the lower slot set 222b. The upper slot set 222a may therefore receive polymer ring strips 110 with a larger width W compared to the lower slot set 222b.

The folded polymer sheet 223 may also comprise a plurality of edges 229a at lower end 20120b that are angled at an angle θ with respect to at least one other edge 229b at the lower end 120b. Put another way, when the stake sleeve 120 is in the open configuration, the edges 229a, 229b define a plane that is angled at the angle θ with respect to a plane defined by edges at extreme end of the upper end 120a. In some embodiments, the angle θ is in the range of 2° to 8°. In some embodiments, the angle θ is in the range of 4° to 6°. This advantageously assists the sleeve to be angled in a non-vertical orientation outward from the centre of the curved band or respective ring 310.

The polymer stake sleeves 120 may have a sleeve length L in the range of about 40 cm to 80 cm.

Each polymer stake 140 may have a line of weakness 146 along the stake length H. The line of weakness 146 may be any one or more of a length-wise crease, fold or bend to provide lengthwise rigidity and assist in strengthening the stake 140 to against excessive deflection about an axis at a non-zero angle to the stake length when the stake is bent about an axis other than an axis along the length H. By providing a line of weakness 146, the polymer stake 140 can be advantageously flattened for transportation and when not in use.

In some embodiments, the polymer stake 140 may be heat formed to shape the polymer stake 140 so that elongate lengthwise surfaces 147, 148 are angled with respect to each other. The shaped polymer stake 140 with angled surfaces provides lengthwise rigidity and strength to against excessive deflection about an axis at a non-zero angle to the stake length when the stake is bent about an axis other than an axis along the length H. In some embodiments the elongate surfaces 147, 148 are angled at about 60°.

The polymer stake 140 may also have a rigidity sufficient to open elongate channel 121 when inserted into elongate channel 121. The polymer stake 140 may, however, be flexible but resilient (or elastic) to advantageously enable the polymer stake 140 to flex along with a plant attached to the polymer stake 140 as a result of wind or the plant being struck. For example, the polymer stake 140 may bend up to 30° without permanent deformation or breaking. The flexibility of the polymer stakes may assist to promote root growth and provide subsequent tree stability compared to using rigid stakes.

The weight of a polymer stake 140 is advantageously less than a conventional metal or wooden stake of the same stake length H. The polymer stakes 140 may have a stake length H in the range of about 120 cm to 230 cm. The stake length H being larger than the sleeve length L to enable the second (upper) end 144 to protrude above the stake sleeve 120 when the stake 140 is partially inserted into the stake sleeve 120. In some embodiments, the first (lower) end 142 protrudes below the stake sleeve 120 when the stake 140 is inserted through the stake sleeve 120.

In some embodiments, an extreme end of the first end 142 of the polymer stakes 140 may be at least partially tapered. This may advantageously assist in enabling the polymer stakes 140 to be received in the elongate channel 121 and assist in driving the polymer stakes 140 into the soil.

The polymer ring strips 110 may define at least one strip slot 112, 113 at an end 114, 116 of the polymer ring strips 110 to secure the end 114, 116 and enable the polymer ring strip 110 to form the respective ring 310 or curved band. The strip slot 112 may be adapted to cooperate with slot 113 so that ends 114, 116 may be secured to each other. By inserting the ring strips 110 through at least two slots of slot sets 222a, 222b, and auxiliary slots 222c, 222d, frame 300 can be assembled.

In some embodiments, the strip slot 112, 113 may be adapted (for example sized and oriented) to receive a portion of the stake sleeve 120 adjacent a slot 222 thereby enabling ends 114, 116 be secured to the stake sleeve 120 and assemble frame 300. In some embodiments, portions of the ends 114, 116 are also welded to the portion of the stake sleeve 120 adjacent slot 222.

The polymer ring strips 110 have a width W. The width W may be in the range of about 3 cm to 10 cm. In some embodiments, the width W of at least one wider ring strip 118 may be greater than the width W of the other ring strips 110. The wider ring strip 118 is designed to be received by upper slot set 222a, 222c. This enables the majority of the stake sleeves 120 and other ring strips 110 to be buried in the soil to provide structural support while the wider ring strip 118 is either buried near the soil surface, at least partially buried or on a top surface of the soil. Advantageously, the wider ring strip 118 forming a curved band or respective ring 310 may assist in containing water near the roots of a plant supported by the plant support 400 or directing water delivered near the plant towards the roots.

The polymer ring strips 110 may have a strip length S in the range of about 120 cm to 180 cm.

The kit 100 and or any one or more of the plurality of polymer ring strips 110, the plurality of polymer stake sleeves 120 and the plurality of polymer stakes 140 may be formed from a polymer sheet 223 comprising a corrugated polymer layer (not shown). In some embodiments, the polymer sheet 223 may comprise a corrugated plastic sheet such as Corflute^{™}, Polyflute^{™} and Coroplast^{™}. The corrugated plastic sheet may comprise: a single continuous polymer sheet attached to one side, or two continuous polymer sheets attached to two sides of the corrugated polymer layer. Polymer stakes 640 described in greater detail below may also be similarly formed from polymer sheet 223.

The frame 300 and plant support 400 formed from polymer sheet 223 may be lighter than a conventional wooden or metal support and therefore transportation, handling and installation of kit 100, frame 300 and plant support 400 may be easier compared to conventional plant supports.

In some embodiments, the polymer sheet 223 may be biodegradable and/or compostable.

Referring to Figure 3, a frame 300 to support a plurality of stakes 140 is shown. The frame 300 comprises a plurality of polymer strips 110 capable of being shaped into a curved band or respective ring 310 and the plurality of polymer sleeves 120 as described herein. The polymer sleeves 120 may be evenly spaced about the curved band or respective ring 310.

In some embodiments, the frame 300 may be generally shaped as a truncated cone to enable a plurality of frames 300 to be stacked together. The truncated cone shape also orients the stake sleeves 120 so that when stakes 140 are inserted into the elongate channels 121, the stakes 140 are oriented at an angle to the soil surface. This advantageously provides greater initial tension and assists in providing load tension between the stakes 140 and strap, ribbon or strip of material (not shown) that is attached to the stem or trunk of the plant being supported. The frame 300 may also be used to orient polymer stakes 640 described in greater detail below.

The slots 220 may be positioned and/or oriented to enable the frame 300 to be generally shaped as a truncated cone when assembled.

Alternatively, to provide the truncated cone shape, an upper curved band or respective ring 310 may be formed from a polymer ring strip 110 with a greater strip length S than the strip length S of the polymer ring strip 110 that forms a lower curved band or lower ring 312.

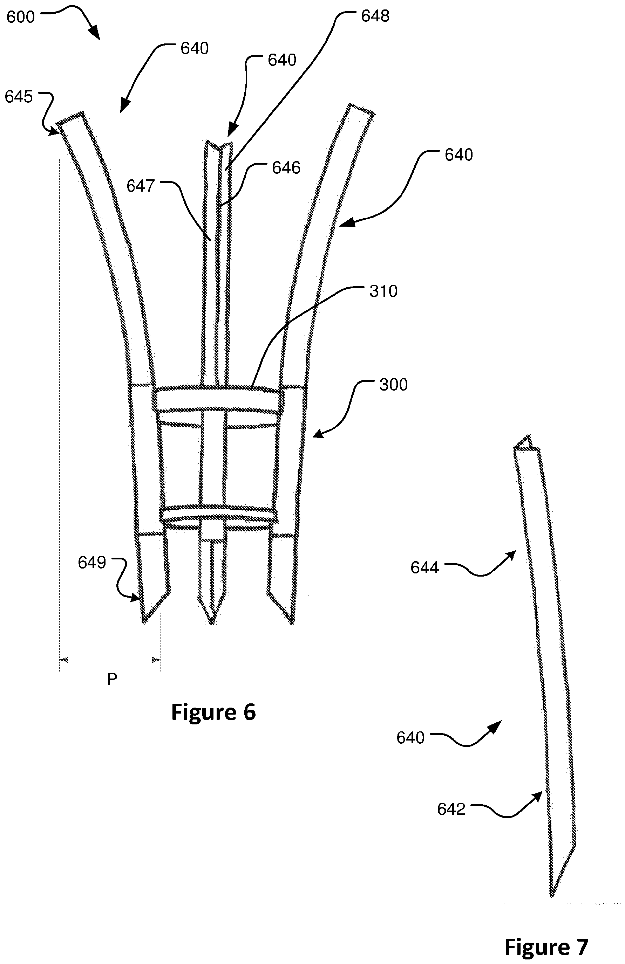

Referring to Figures 6 and 7, a plant support 600 is shown according to some embodiments. The plant support 600 comprises a frame 300 and a plurality of polymer stakes 640. One or more of the polymer stakes 640 may be curved along at least part (or portion) of their length. In some embodiments, the plant support 600 comprises three polymer stakes 640.

When the plant support 600 is assembled with a polymer stake 640 the first (lower) end 642 is up-standing and/or may be oriented in a non-vertical orientation. The polymer stakes 640 may be curved along their length such that the second (upper) end 644 extends outwardly away from the first (lower) end 642 and the centre of the frame 300.

In some embodiments, the second (upper) end 644 extends outwardly away from the first (lower) end 642 such that a projection P of a second extreme end 645 of second (upper) end 644 onto a horizontal radial line from the centre of the frame 300 is in the range of about 10 cm to about 25 cm away from a first extreme end 649 of first (lower) end 642.

The curved part (or portion) of the polymer stakes 640 advantageously assists the polymer stake 640 to flex along with a plant attached to the polymer stake 640. The curvature of the polymer stakes 640 may act as a shock absorber and have a spring-like quality (i.e. a resilience). As previously indicated, the flexibility of the polymer stakes may allow a sapling or other plant to sway more than prior rigid stakes. This reduced rigidity and increased swaying can assist to promote root growth and thereby provide subsequent increased tree stability, when compared to using rigid stakes.

The polymer stakes 640 are sized to fit through the elongate channel 121 of sleeve 120. The polymer stakes 640 have a lengthwise rigidity sufficient to cooperate with the stake sleeves 120 and ring strips 110 to form the plant support 600 when the first ends 642 of the stakes are submerged in soil along with at least a portion of the stake sleeves 120.

The polymer stake 640 has a rigidity sufficient to open elongate channel 121 when inserted into elongate channel 121. In some embodiments, both the polymer stake 640 and the corresponding stake sleeve 120 deform when the polymer stake 640 is inserted into the elongate channel 121 of the stake sleeve 120.

The polymer stake 640 may be flexible but resilient (or elastic) to advantageously enable the polymer stake 640 to flex along with a plant attached to the polymer stake 640 as a result of wind or the plant being struck. For example, the polymer stake 640 may bend up to another 30° beyond its nominal curved shape without permanent deformation or breaking. The flexibility of the polymer stakes may assist to promote root growth and provide subsequent tree stability compared to using rigid stakes.

The weight of a polymer stake 640 is advantageously less than a conventional metal or wooden stake of the same stake length H. The polymer stakes 640 may have a stake length H in the range of about 120 cm to 230 cm. In some embodiments, the stake length H of the polymer stake 640 is about 180 cm.

The stake length H is larger than the sleeve length L to enable the second (upper) end 644 to protrude above the stake sleeve 120 when the stake 640 is partially inserted into the stake sleeve 120. In some embodiments, the first (lower) end 642 protrudes below the stake sleeve 120 when the stake 640 is inserted through the stake sleeve 120.

In some embodiments, an extreme end of the first end 642 of the polymer stakes 640 may be at least partially tapered. This may advantageously assist in enabling the polymer stakes 640 to be received in the elongate channel 121 and assist in driving the polymer stakes 640 into the soil.

Each polymer stake 640 may be formed by locally heating a length-wise (centre) line 646 along the length of the polymer stake 640 to enable elongate lengthwise surfaces 647, 648 to be angled with respect to each other, forming a v-shape in cross-section. Once cooled, the polymer stake 640 retains its formed shape. To soften the polymer material that the polymer stake 640 is formed from, the polymer stake 640 may be locally heated close to but below the melting point of the polymer material. For example, the polymer stake 640 may be locally heated to a temperature in the range of 125°C to 150°C. In embodiments where the polymer stake 640 is made from a fluted plastic board or sheet material with a corrugated internal layer, the structure of the corrugated internal layer may be partially destroyed in the heating process and may form a continuous solid layer.

The polymer stake 640 may be asymmetrically heated such that only a first face (surface) of polymer stake 640 is heated. As a result of the asymmetric heating, the temperature of the first face may be greater than a reverse (second) face (surface) of polymer stake 640. After the elongate lengthwise surfaces 647, 648 have been angled with respect to each other, the heated length-wise line 646 is allowed to cool. While cooling, the second face contracts, hardens or densifies before the first face and the polymer stake 640 bends towards the second face such that the polymer stake 640 advantageously curves along its length.

In another embodiment, the heated polymer stake 640 may be placed into a jig to assist in shaping the polymer stake 640 so that elongate lengthwise surfaces 647, 648 are angled with respect to each other and/or so the polymer stake 640 is curved along its length.

In some embodiments, a heating element (not shown) such as a heated wire or bar element may be placed adjacent to a polymer stake 640 to radiatively heat the length-wise centre line 646 on the first face (surface) of polymer stake 640. The heating element need not physically contact the first face of the polymer stake 640.

The reverse (second) face (surface) of polymer stake 640 may be cooled by abutting two elongate tubes (note shown) with cool (or refrigerated) water running on the reverse face simultaneously (or contemporaneously) while the length-wise centre line 646 is heated. The elongate tubes may be placed on either side of the length-wise line 646 to cool the polymer stake 640 on either side of the length-wise centre line 646. This advantageously limits the temperature of the reverse face of the polymer stake on either side of the length-wise centre line 646 to better define the length-wise centre line 646 while allowing the length-wise centre line 646 to be hotter.

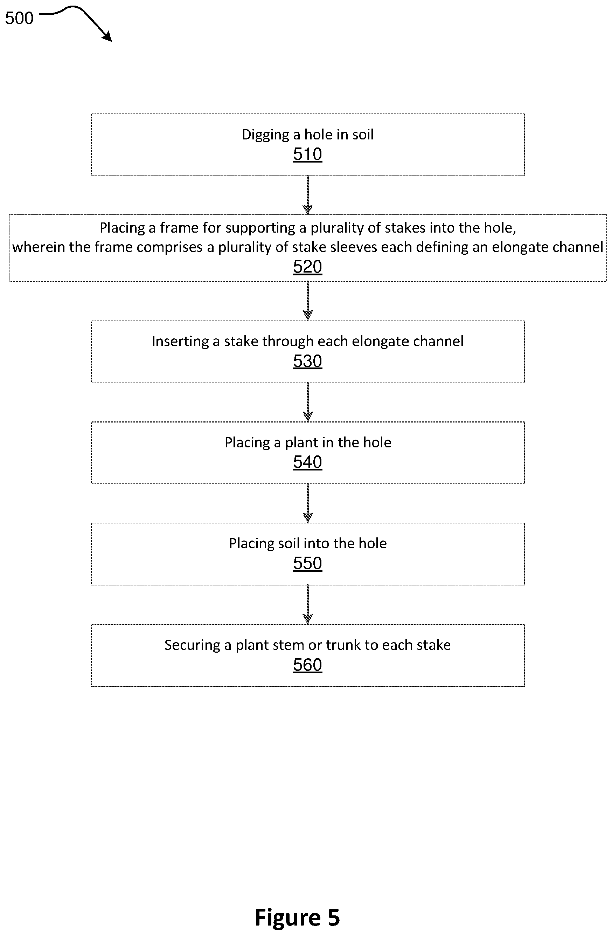

Referring to Figure 5, a method 500 of supporting a plant is described herein. The method 500 comprises digging a hole in soil to a depth of at least a stake sleeve height L, at 510. A frame 300 for supporting a plurality of stakes is placed into the hole, at 520. The frame 300 comprising a plurality of stake sleeves 120 each defining an elongate channel 121, and a plurality of curved bands or respective rings 310, 312. The frame 300 may be assembled from parts of kit 100 as described herein. A stake 140, 640 is inserted through each elongate channel 121 to thereby assemble plant support 400, at 530. The stake sleeves 120 advantageously position and orient the stakes 140, 640.

Method 500 also comprises placing a plant in the hole such that it is within the plant support 400, 600 and plant roots of the plant are below an upper curved band or upper respective ring 310, at 540. Soil is placed into the hole to at least cover the plant roots, at 550. The upper curved band or respective ring 310 may either be buried by the soil, partially buried by the soil or be on the surface of the soil.

The plant stem or trunk is then secured to each of the stakes 140, 640 at 560. For example, the plant stem or trunk may be secured to each stake 140, 640 by tying a strap, ribbon or strip of material at least partially around the stem or trunk of the plant being supported and at least partially around the stake 140, 640.

In some alternative embodiments, the method 500 may comprise inserting stakes 140, 640 into stake sleeves 120 before placing the assembled plant support 400, 600 into the hole. In some embodiments, the plant is placed into the hole before the frame 300 or plant support 400, 600.

The stakes 140, 640 may also be driven or pushed into the soil below the hole.

In some embodiments, method 500 may comprising inserting rigid stakes into stake sleeves 121 to position and orient the rigid stakes.

In some embodiments, method 500 comprises planting a seed and the plant support 400, 600 is used to support the subsequent seedling, sapling or tree that grows from the seed. In these embodiments, method 500 comprises placing a seed in the hole such that it is within the plant support 400, 600 and the seed is below an upper curved band or upper respective ring 310.

## Claims

1. A kit (100) for forming a plant support (400, 600), the kit comprising:
a plurality of polymer ring strips (110), each formable into a respective ring (310);
a plurality of polymer stake sleeves (120), each sleeve defining an elongate channel (121) to receive a stake (140, 640) therethrough and each sleeve defining a plurality of slots (222) sized to receive at least a portion of a respective ring strip (110) therethrough, the slots being defined at spaced locations along a sleeve length (L) of each sleeve (120); and
a plurality of polymer stakes (140, 640), each stake being sized to fit through the elongate channel (121) and having a stake length (H) greater than the sleeve length (L), wherein each stake (140, 640) has a first end (142, 642) and an opposite second end (144, 644), and wherein a lengthwise rigidity of the stake (140, 640) is sufficient to cooperate with the sleeves (120) and ring strips (110) to form the plant support (400) when the first ends (142, 642) of the stakes (140, 640) are submerged in soil along with at least a portion of the sleeves (120);
wherein the plurality of slots (222) comprise:
an upper slot set (222a) positioned near a first end (120a) of the sleeve (120); and
a lower slot set (222b) positioned near a second end (120b) of the sleeve (120).

2. The kit (100) of claim 1, wherein each polymer stake (140, 640) has a length-wise crease, fold or bend (146, 646) to assist in strengthening the stake against deflection when the stake is bent about the crease, fold or bend (146, 646).

3. The kit (100) of either claim 1 or 2, wherein each polymer stake (140, 640) is shaped to define two elongate lengthwise surfaces (147, 148, 647, 648) angled with respect to each other.

4. The kit (100) according to claim 3, wherein each polymer stake (140, 640) is curved along at least part of its length.

5. The kit (100) according to any one of claims 1 to 4, wherein each sleeve (120) is formed of a folded polymer sheet (223).

6. The kit (100) of claim 5, wherein opposite edge portions (227a, 227b) of the folded polymer sheet are attached to each other to define the elongate channel (121) in an interior space of the folded polymer sheet (223).

7. The kit (100) of claim 6, wherein the opposite edge portions (227a, 227b) are attached by any one or more of: hot air welding, ultrasonic welding, and a set of tabs and slots.

8. The kit (100) of any one of claims 1 to 7, wherein the plurality of slots (222) comprise a plurality of slot pairs (222a, 222b) at the spaced locations, each slot of a slot pair (222a, 222b) being located at a same lengthwise position along the sleeve (120), wherein one of the ring strips (110) can be received through both slots of a slot pair (222a, 222b).

9. The kit (100) of any one of claims 1 to 8, wherein at least one of: the plurality of polymer ring strips (110), the plurality of polymer stake sleeves (120) and the plurality of polymer stakes (140, 640); are formed of folded polymer sheet (223) including a corrugated polymer layer.

10. The kit (100) of any one of claims 1 to 9, wherein the first end (142, 642) of the polymer stakes (140, 640) is at least partially tapered.

11. The kit (100) of any one of claims 1 to 10, wherein at least one strip slot (112, 113) is defined by the polymer ring strip (110) at an end (114, 116) of the polymer ring strips (110) to secure the end (114, 116) and enable the polymer ring strip (110) to form the respective ring (310).

12. A plant support (400, 600) formed from the kit (100) of any one of claims 1 to 11, wherein the plant support comprises a frame comprising the plurality of polymer ring strips, each formed into a respective curved band; and the plurality of polymer stake sleeves receiving the respective polymer ring strip therethrough.

13. The plant support (400, 600) of claim wherein the respective curved band is shaped as a ring (310), and wherein the stake sleeves (120) are spaced circumferentially and evenly around the curved bands (310).

14. A method (500) of supporting a plant by using the kit according to any of the claims 1-11 or the plant support according to any of the claims 12 and 13, the method comprising:
digging a hole in soil to a depth of at least a stake sleeve height (L);
placing a frame (300) for supporting the plurality of polymer stakes (140, 640) into the hole, the frame (300) comprising the plurality of stake sleeves (120) and the plurality of curved bands (310), wherein each stake sleeve (120) defines an elongate channel (121) to receive the stake (140, 640) therethrough and each sleeve (120) defining the plurality of slots (222) receiving the respective polymer ring strip (110) therethrough, the slots (222) being defined at spaced locations along the sleeve length (L) of each sleeve (120), and wherein the plurality of slots (222) comprise the upper slot set (222a) positioned near the first end (120a) of the sleeve (120) and the lower slot set (222b) positioned near the second end (120b) of the sleeve (120);
inserting the
stake (140, 640) through each elongate channel (121) defined by the plurality of stake sleeves (120) to thereby assemble the plant support (400, 600);
placing a plant in the plant support (400, 600) such that plant roots are below an upper curved band (310);
placing soil into the hole to at least cover the plant roots; and
securing a plant stem or trunk of the plant to each stake (140, 640).

## Patentansprüche

1. Bausatz (100) zum Ausbilden einer Pflanzenstütze (400, 600), wobei der Bausatz Folgendes umfasst:
eine Mehrzahl von Polymerringstreifen (110), die jeweils in einen jeweiligen Ring (310) ausbildbar sind;
eine Mehrzahl von Polymerstabhülsen (120), wobei jede Hülse einen länglichen Kanal (121) zum Aufnehmen eines Stabs (140, 640) dort hindurch definiert und jede Hülse eine Mehrzahl von Schlitzen (222) definiert, die so dimensioniert sind, um zumindest einen Abschnitt eines jeweiligen Ringstreifens (110) dort hindurch aufzunehmen, wobei die Schlitze an beabstandeten Stellen entlang einer Hülsenlänge (L) jeder Hülse (120) definiert sind; und
eine Mehrzahl von Polymerstäben (140, 640), wobei jeder Stab so dimensioniert ist, um durch den länglichen Kanal (121) zu passen, und eine Stablänge (H) aufweist, die größer als die Hülsenlänge (L) ist, wobei jeder Stab (140, 640) ein erstes Ende (142, 642) und ein gegenüberliegendes zweites Ende (144, 644) aufweist, und wobei eine Längssteifigkeit des Stabs (140, 640) ausreicht, um mit den Hülsen (120) und Ringstreifen (110) zusammenzuwirken, um die Pflanzenstütze (400) auszubilden, wenn die ersten Enden (142, 642) der Stäbe (140, 640) zusammen mit zumindest einem Abschnitt der Hülsen (120) in Erde eingetaucht sind;
wobei die Mehrzahl von Schlitzen (222) umfasst:
einen oberen Schlitzsatz (222a), der nahe einem ersten Ende (120a) der Hülse (120) positioniert ist; und
einen unteren Schlitzsatz (222b), der nahe einem zweiten Ende (120b) der Hülse (120) positioniert ist.

2. Bausatz (100) nach Anspruch 1, wobei jeder Polymerstab (140, 640) einen Knick, einen Falz oder eine Biegung (146, 646) in Längsrichtung aufweist, um beim Verstärken des Stabs gegen eine Durchbiegung zu helfen, wenn der Stab um den Knick, den Falz oder die Biegung (146, 646) gebogen ist.

3. Bausatz (100) nach Anspruch 1 oder 2, wobei jeder Polymerstab (140, 640) so geformt ist, um zwei längliche Flächen (147, 148, 647, 648) in Längsrichtung zu definieren, die in Bezug aufeinander abgewinkelt sind.

4. Bausatz (100) nach Anspruch 3, wobei jeder Polymerstab (140, 640) entlang zumindest eines Teils seiner Länge gekrümmt ist.

5. Bausatz (100) nach einem der Ansprüche 1 bis 4, wobei jede Hülse (120) aus einer gefalteten Polymerplatte (223) ausgebildet ist.

6. Bausatz (100) nach Anspruch 5, wobei gegenüberliegende Kantenabschnitte (227a, 227b) der gefalteten Polymerplatte aneinander angebracht sind, um den länglichen Kanal (121) in einem Innenraum der gefalteten Polymerplatte (223) zu definieren.

7. Bausatz (100) nach Anspruch 6, wobei die gegenüberliegenden Kantenabschnitte (227a, 227b) durch eines oder mehrere beliebige von Folgendem angebracht sind: Heißluftschweißen, Ultraschallschweißen und einen Satz von Laschen und Schlitzen.

8. Bausatz (100) nach einem der Ansprüche 1 bis 7, wobei die Mehrzahl von Schlitzen (222) eine Mehrzahl von Schlitzpaaren (222a 222b) an den beabstandeten Stellen umfasst, wobei jeder Schlitz eines Schlitzpaars (222a, 222b) an einer gleichen Position in Längsrichtung entlang der Hülse (120) angeordnet ist, wobei einer der Ringstreifen (110) durch beide Schlitze eines Schlitzpaars (222a, 222b) aufgenommen sein kann.

9. Bausatz (100) nach einem der Ansprüche 1 bis 8, wobei mindestens eine von: der Mehrzahl von Polymerringstreifen (110), der Mehrzahl von Polymerstabhülsen (120) und der Mehrzahl von Polymerstäben (140, 640); aus einer gefalteten Polymerplatte (223) ausgebildet ist, die eine gewellte Polymerschicht umfasst.

10. Bausatz (100) nach einem der Ansprüche 1 bis 9, wobei das erste Ende (142, 642) der Polymerstäbe (140, 640) zumindest teilweise verjüngt ist.

11. Bausatz (100) nach einem der Ansprüche 1 bis 10, wobei mindestens ein Streifenschlitz (112, 113) durch den Polymerringstreifen (110) an einem Ende (114, 116) der Polymerringstreifen (110) definiert ist, um das Ende (114, 116) zu befestigen und zu ermöglichen, dass der Polymerringstreifen (110) den jeweiligen Ring (310) ausbildet.

12. Pflanzenstütze (400, 600), die aus dem Bausatz (100) nach einem der Ansprüche 1 bis 11 ausgebildet ist, wobei die Pflanzenstütze einen Rahmen, der die Mehrzahl von Polymerringstreifen, die jeweils in ein jeweiliges gekrümmtes Band ausgebildet sind, umfasst; und die Mehrzahl von Polymerstabhülsen, die den jeweiligen Polymerringstreifen dort hindurch aufnimmt, umfasst.

13. Pflanzenstütze (400, 600) nach Anspruch 12,
wobei das jeweilige gekrümmte Band als ein Ring (310) geformt ist, und
wobei die Stabhülsen (120) in Umfangsrichtung und gleichmäßig um die gekrümmten Bänder (310) beabstandet sind.

14. Verfahren (500) zum Stützen einer Pflanze unter Verwendung des Bausatzes nach einem der Ansprüche 1-11 oder der Pflanzenstütze nach einem der Ansprüche 12 und 13, wobei das Verfahren Folgendes umfasst
Graben eines Lochs in Erde auf eine Tiefe von mindestens einer Stabhülsenhöhe (L);
Platzieren eines Rahmens (300) zum Stützen der Mehrzahl von Polymerstäben (140, 640) in dem Loch, wobei der Rahmen (300) die Mehrzahl von Stabhülsen (120) und die Mehrzahl von gekrümmten Bändern (310) umfasst, wobei jede Stabhülse (120) einen länglichen Kanal (121) zum Aufnehmen des Stabs (140, 640) dort hindurch definiert und jede Hülse (120) die Mehrzahl von Schlitzen (222) definiert, die den jeweiligen Polymerringstreifen (110) dort hindurch aufnehmen, wobei die Schlitze (222) an beabstandeten Stellen entlang der Hülsenlänge (L) jeder Hülse (120) definiert sind, und wobei die Mehrzahl von Schlitzen (222) den oberen Schlitzsatz (222a), der nahe dem ersten Ende (120a) der Hülse (120) positioniert ist, und den unteren Schlitzsatz (222b), der nahe dem zweiten Ende (120b) der Hülse (120) positioniert ist, umfasst;
Einsetzen des Stabs (140, 640) durch jeden länglichen Kanal (121), der durch die Mehrzahl von Stabhülsen (120) definiert ist, um dadurch die Pflanzenstütze (400, 600) zusammenzubauen;
Platzieren einer Pflanze in der Pflanzenstütze (400, 600) derart, dass sich Pflanzenwurzeln unterhalb eines oberen gekrümmten Bands (310) befinden;
Platzieren von Erde in dem Loch, um zumindest die Pflanzenwurzeln zu bedecken; und
Befestigen eines Pflanzenstängels oder -stamms an jedem Stab (140, 640).

## Revendications

1. Kit (100) pour former un tuteur pour plante (400, 600), le kit comprenant :
une pluralité de bandelettes d'anneau en polymère (110), chacune formable en un anneau respectif (310) ;
une pluralité de manchons de pieu en polymère (120), chaque manchon définissant un canal allongé (121) pour recevoir un pieu (140, 640) à travers celui-ci et chaque manchon définissant une pluralité de fentes (222) dimensionnées pour recevoir au moins une partie d'une bandelette d'anneau respective (110) à travers celles-ci, les fentes étant définies à des emplacements espacés le long d'une longueur de manchon (L) de chaque manchon (120) ; et
une pluralité de pieux en polymère (140, 640), chaque pieu étant dimensionné pour aller à travers le canal allongé (121) et ayant une longueur de pieu (H) supérieure à la longueur de manchon (L), dans lequel chaque pieu (140, 640) a une première extrémité (142, 642) et une seconde extrémité opposée (144, 644), et dans lequel une rigidité, dans le sens de la longueur, du pieu (140, 640) est suffisante pour coopérer avec les manchons (120) et bandelettes d'anneau (110) pour former le tuteur pour plante (400) lorsque les premières extrémités (142, 642) des pieux (140, 640) sont enterrées dans la terre conjointement avec au moins une partie des manchons (120) ;
dans lequel la pluralité de fentes (222) comprennent :
un ensemble supérieur de fentes (222a) positionné près d'une première extrémité (120a) du manchon (120) ; et
un ensemble inférieur de fentes (222b) positionné près d'une seconde extrémité (120b) du manchon (120).

2. Kit (100) selon la revendication 1, dans lequel chaque pieu en polymère (140, 640) a une rainure, un pli ou une pliure (146, 646), dans le sens de la longueur, pour aider à renforcer le pieu contre une déflexion lorsque le pieu est plié sur la rainure, le pli ou la pliure (146, 646).

3. Kit (100) selon la revendication 1 ou 2, dans lequel chaque pieu en polymère (140, 640) est façonné pour définir deux surfaces allongées, dans le sens de la longueur, (147, 148, 647, 648) inclinées l'une par rapport à l'autre.

4. Kit (100) selon la revendication 3, dans lequel chaque pieu en polymère (140, 640) est incurvé le long d'au moins une partie de sa longueur.

5. Kit (100) selon l'une quelconque des revendications 1 à 4, dans lequel chaque manchon (120) est formé d'une feuille en polymère pliée (223).

6. Kit (100) selon la revendication 5, dans lequel des parties de bord opposées (227a, 227b) de la feuille en polymère pliée sont attachées l'une à l'autre pour définir le canal allongé (121) dans un espace intérieur de la feuille en polymère pliée (223).

7. Kit (100) selon la revendication 6, dans lequel les parties de bord opposées (227a, 227b) sont assemblées par un ou plusieurs quelconques de : soudage à air chaud, soudage ultrasonique, et un ensemble de languettes et de fentes.

8. Kit (100) selon l'une quelconque des revendications 1 à 7, dans lequel la pluralité de fentes (222) comprennent une pluralité de paires de fentes (222a, 222b) aux emplacements espacés, chaque fente d'une paire de fentes (222a, 222b) étant située à une même position dans le sens de la longueur le long du manchon (120), dans lequel une des bandelettes d'anneau (110) peut être reçue à travers les deux fentes d'une paire de fentes (222a, 222b).

9. Kit (100) selon l'une quelconque des revendications 1 à 8, dans lequel au moins une de : la pluralité de bandelettes d'anneau en polymère (110), la pluralité de manchons de pieu en polymère (120) et la pluralité de pieux en polymère (140, 640) ; sont formés de feuille en polymère pliée (223) incluant une couche en polymère ondulée.

10. Kit (100) selon l'une quelconque des revendications 1 à 9, dans lequel la première extrémité (142, 642) des pieux en polymère (140, 640) est au moins partiellement effilée.

11. Kit (100) selon l'une quelconque des revendications 1 à 10, dans lequel au moins une fente de bandelette (112, 113) est définie par la bandelette d'anneau en polymère (110) à une extrémité (114, 116) des bandelettes d'anneau en polymère (110) pour fixer l'extrémité (114, 116) et permettre à la bandelette d'anneau en polymère (110) de former l'anneau respectif (310).

12. Tuteur pour plante (400, 600) formé à partir du kit (100) selon l'une quelconque des revendications 1 à 11, dans lequel le tuteur pour plante comprend un cadre comprenant la pluralité de bandelettes d'anneau en polymère, chacune formée en une bande courbée respective ; et la pluralité de manchons de pieu en polymère recevant la bandelette d'anneau en polymère respective à travers ceux-ci.

13. Tuteur pour plante (400, 600) selon la revendication 12, dans lequel la bande courbée respective est façonnée sous forme d'anneau (310), et
dans lequel les manchons de pieu (120) sont espacés circonférentiellement et régulièrement autour des bandes courbées (310).

14. Procédé (500) de supporter une plante en utilisant le kit selon l'une quelconque des revendications 1 à 11 ou le tuteur pour plante selon l'une quelconque des revendications 12 et 13, le procédé comprenant
le creusage d'un trou dans la terre jusqu'à une profondeur d'au moins une hauteur de manchon de pieu (L) ;
le placement d'un cadre (300) pour supporter la pluralité de pieux en polymère (140, 640) dans le trou,
le cadre (300) comprenant la pluralité de manchons de pieu (120) et la pluralité de bandes courbées (310),
dans lequel chaque manchon de pieu (120) définit un canal allongé (121) pour recevoir le pieu (140, 640) à travers celui-ci, et chaque manchon (120) définissant la pluralité de fentes (222) recevant la bandelette d'anneau en polymère respective (110) à travers celles-ci, les fentes (222) étant définies à des emplacements espacés le long de la longueur de manchon (L) de chaque manchon (120), et dans lequel la pluralité de fentes (222) comprennent l'ensemble supérieur de fentes (222a) positionné près de la première extrémité (120a) du manchon (120) et l'ensemble inférieur de fentes (222b) positionné près de la seconde extrémité (120b) du manchon (120) ;
l'insertion du pieu (140, 640) à travers chaque canal allongé (121) défini par la pluralité de manchons de pieu (120) pour ainsi assembler le tuteur pour plante (400, 600) ;
le placement d'une plante dans le tuteur pour plante (400, 600) de telle sorte que des racines de plante soient en dessous d'une bande courbée supérieure (310) ;
le placement de terre dans le trou pour au moins couvrir les racines de plante ; et
la fixation d'une tige de plante ou d'un tronc de la plante à chaque pieu (140, 640).
